# EUROPÄISCHE PATENTSCHRIFT

(11) **EP 1 213 588 B1**
(45) Veröffentlichungstag und Bekanntmachung des Hinweises auf die Patenterteilung: **03.08.2005**
(21) Anmeldenummer: 02004580.3
(22) Anmeldetag: 15.03.1997
(51) Int. Cl.: G01N 35/10

(54) **Vorrichtung zur Reinigung von Pipettiernadeln oder Rührern**
Device for cleaning pipette needles or stirrers
Dispositif pour nettoyer des aiguilles à pipetter ou des agitateurs

(30) Priorität: 18.03.1996 DE 19610607
(43) Veröffentlichungstag der Anmeldung: 12.06.2002
(62) Teilanmeldung aus: 97908241.9
(73) Patentinhaber: Roche Diagnostics GmbH, 68305 Mannheim (DE)
(72) Erfinder: Fürst, Otto, Dr., 68519 Viernheim (DE); Jaeck, Thomas, 68542 Heddesheim (DE); Weber, Peter, 82418 Murnau (DE); Jansen, Paul, 68199 Mannheim (DE)
(74) Vertreter: Isenbruck, Günter, Dr.

(56) Entgegenhaltungen:
- EP-A- 0 253 519
- EP-A- 0 725 279
- DE-A- 3 839 896
- US-A- 4 495 149
- US-A- 4 552 163
- PATENT ABSTRACTS OF JAPAN vol. 12, no. 114 (P-688), 12. April 1988 (1988-04-12) -& JP 62 242858 A (NIPPON TECTRON CO LTD), 23. Oktober 1987 (1987-10-23)

## Beschreibung

Die vorliegende Erfindung bezieht sich auf das Gebiet der automatisierten Analyse, bei der Flüssigkeiten mit Pipetten pipettiert werden und gegebenenfalls Flüssigkeiten mit Rührern verrührt werden.

Die vorliegende Erfindung betrifft eine Vorrichtung zur Reinigung von Pipettiernadeln oder Rührern mit
- einem Bassin zur Aufnahme von Reinigungsflüssigkeit, das an seiner Unterseite einen Fluidkanal zur Befüllung und/oder Entleerung des Bassins sowie
- mindestens einen Zulauf besitzt, der in mindestens eine Düse mündet, die in das Bassin innere gerichtet ist.

Im Gebiet der Analyse von Probeflüssigkeiten, wie zum Beispiel Blut oder Urin, ist es notwendig, diese Probeflüssigkeiten sowie gegebenenfalls Waschflüssigkeiten, Reagenzien usw. mit einer Pipette in Gefäße zu geben. Um eine Verschleppung zwischen aufeinanderfolgenden Proben oder Reagenzien zu vermeiden, muß die Pipette zwischen den einzelnen Pipettiervorgängen gespült werden. Falls in Analyseautomaten das Durchmischen von Flüssigkeiten notwendig ist, so wird dies in der Regel mit Rührern, die in die Probeflüssigkeit eintauchen, durchgeführt. Um eine Verschleppung von Mischgut durch einen Rührer zu vermeiden, muß dieser zwischen den einzelnen Mischvorgängen gereinigt werden. Als Mischgut kommen dabei sowohl Flüssigkeiten als auch Suspensionen, wie zum Beispiel magnetische Mikropartikel in Flüssigkeiten, in Frage.

Im Stand der Technik sind Waschvorrichtungen für Pipetten und Rührer bekannt, bei denen die zu waschenden Vorrichtungen in ein Bassin mit Waschflüssigkeit eingetaucht werden und die Waschflüssigkeit nach ein oder mehreren Waschvorgängen ausgetauscht wird. Der Flüssigkeitsaustausch erfolgt in der Regel durch Überlauf aus dem Bassin oder durch ein Absaugen der Flüssigkeit durch einen Fluidkanal.

In der europäischen Patentanmeldung 0 661 542 ist eine Vorrichtung zum Waschen von Pipetten beschrieben, bei der die Pipette durch einen Kanal geführt wird, der die Pipette in einem Abstand von 1 mm oder weniger umgibt. Für den Waschvorgang wird der Kanal mit Flüssigkeit gespült.

EP 0 725 279 A1 betrifft eine Vorrichtung, die in einem Analysator zum Waschen eines Messfühlers eingesetzt wird. Die Vorrichtung umfasst einen Waschraum mit einem bestimmten Innendurchmesser und eine damit verbundene Waschflüssigkeitsquelle. Die Reinigung eines in den Waschraum eingeführten Messfühlers erfolgt mittels Waschflüssigkeitsstrahlen, wobei die Waschflüssigkeit entlang des Messfühlers strömt und durch das untere Ende des Waschraums abgeleitet wird.

JP 62242858 A bezieht sich auf eine Reinigungsvorrichtung für einen Messfühler, in der Wasser durch eine Vielzahl von Düsen in einen Reinigungsraum eingespritzt wird, in den der Messfühler eingeführt wird. Ferner wird der Messfühler in einem Tauchbehälter mit Wasser gereinigt.

DE 38 39 896 A1 hat eine automatische Analysiervorrichtung zum Gegenstand, in der eine Probendüse unter anderem zu einem Reinigungstank bewegt werden kann, in dem die inneren und äußeren Wände von Probendüsen gereinigt bzw. gespült werden, damit sie als Reserve für den nächsten Saugvorgang zur Verfügung stehen können. Die Reinigung der äußeren peripheren Wand der Probendüse wird durch Spritzen von Wasser durch die Reinigungsdüsen durchgeführt, die an dem Reinigungstank gegen die äußere periphere Wand der Probendüse durch die Wirkung der Beschickungspumpe gesichert ist. Die innere periphere Wand der Probendüse wird so gereinigt, dass durch die Wirkung der Beschickungspumpe das Wasser in die Probendüse durch die Mikrospritze gespritzt wird und das so gespritzte Wasser in den Reinigungstank entladen wird.

US-A-4,495,149 bezieht sich auf eine Analysiervorrichtung, die einen Spül- und Reinigungsmechanismus zum Reinigen einer Abgabenadel aufweist. Zur Reinigung wird die Abgabenadel in einen Hohlraum abgesenkt und angehoben, während sie mit einer Spülflüssigkeit besprüht wird, die durch dafür vorgesehene Passagen eingespritzt wird. Das Abspülen des Inneren der Abgabenadel erfolgt dadurch, dass alternierend Reinigungsflüssigkeit und Luft durch die Nadel geschickt werden.

Dem Stand der Technik bekannte Vorrichtungen mit einem Bassin besitzen den Nachteil, daß die Flüssigkeitszuführung und -abführung aus dem Bassin über einen gemeinsamen Fluidkanal und/oder ein Abführen aus dem Bassin durch ein Überlaufen erfolgt und somit eine Vermischung von verbrauchter und frischer Waschflüssigkeit nicht vermieden werden kann. Weiterhin besitzen diese Vorrichtungen den Nachteil, daß sie nach einem Verdünnungsprinzip arbeiten, das heißt, daß die an der Pipette anhaftende Flüssigkeit mit der Waschflüssigkeit verdünnt wird, so daß auch nach dem Entfernen der Pipette aus dem Bassin Flüssigkeit haften bleibt, die zu einem gewissen Prozentsatz verunreinigt ist. Bei der in EP-A-0 661 542 beschriebenen Vorrichtung wird letzteres Problem zwar vermieden, die Vorrichtung ist jedoch aufgrund der Anpassung des Kanals an den Pipettendurchmesser auf einen bestimmten Pipettentyp beschränkt. Eine Verwendung dieser Waschvorrichtung für verschiedene Pipettentypen oder wechselweise für Pipetten und Rührer ist demnach nicht möglich.

Aufgabe der vorliegenden Erfindung war es, eine Verfahren zur Reinigung von Pipettiernadeln zur Verfügung zu stellen, das eine hohe Reinigungseffizienz besitzt und die Reinigung unterschiedlicher Gegenstände, wie verschiedene Pipettentypen, ermöglicht.

Eine Vorrichtung zur Reinigung von Pipetten besitzt ein Bassin zur Aufnahme von Reinigungsflüssigkeit. Das Bassin besitzt vorzugsweise im wesentlichen die Gestalt eines Hohlzylinders mit einem Innendurchmesser zwischen 0,7 und 3,5 cm. Der Zylinder kann auch eine von der Kreisform abweichende Grundfläche aufweisen. Die Höhe des Zylinders in dem mit Waschflüssigkeit gefüllten Bereich liegt in der Größenordnung von 10 cm, sie kann jedoch abhängig von der Verwendung stark nach oben oder unten abweichen. Der Bassingrundkörper kann aus einer Reihe von Materialien, wie Metallen oder Kunststoffen, gefertigt sein, wobei letztere bevorzugt sind. Der Grundkörper ist vorzugsweise so gefertigt, daß er stehend auf einer Unterlage befestigt werden kann. Weiterhin besitzt der Grundkörper eine Reihe von Ausnehmungen.

In seinem unteren Bereich besitzt der Bassingrundkörper eine Ausnehmung, die einem Fluidkanal zur Befüllung und/oder Entleerung des Bassins dient. Bevorzugt ist diese Ausnehmung an der tiefsten Stelle des Bassininnenraumes angebracht, so daß verbrauchte Waschflüssigkeit möglichst vollständig aus dem Bassin entfernt werden kann. Dies kann beispielsweise erreicht werden, wenn der Bassinboden gekrümmt oder geneigt ist.

In seinem oberen Bereich besitzt der Bassingrundkörper eine oder mehrere Ausnehmungen für Fluidkanäle, die in eine oder mehrere Düsen einmünden. Die eine oder mehreren Düsen sind in das Bassininnere gerichtet und dienen zum Besprühen einer Pipettiernadel, der in das Bassininnere eingeführt wird. Vorzugsweise ist jede der Düsen so ausgerichtet, daß der aus ihr austretende Flüssigkeitsstrahl um 20 bis 70 °, am besten um ca. 45 °, aus der Waagerechten nach unten gerichtet ist. Es ist weiterhin von Vorteil, wenn bei Anwesenheit mehrerer Düsen diese so ausgerichtet sind, daß sich die Flüssigkeitsstrahlen in einem Punkt, vorzugsweise in der Längsachse des Bassins, treffen. An einer besonders bevorzugten Ausführungsform befinden sich die Düsen in einem Einsatz, der in den Bassingrundkörper eingeschraubt werden kann. Auf der Außenseite des Metalleinsatzes befindet sich eine umlaufende Nut, in der sich Bohrungen für die Düsen befinden. Wird der Metalleinsatz in den Bassingrundkörper eingeschraubt, so bildet sich aufgrund der Nut zwischen dem Grundkörper und dem Einsatz ein Zwischenraum, der über einen oder mehrere Zuläufe mit Waschflüssigkeit gespeist wird. Es hat sich als vorteilhaft herausgestellt, wenn zwei Zuläufe verwendet werden, die an gegenüberliegenden Seiten des Bassingrundkörpers angeordnet sind. Der Einsatz, der in den Bassingrundkörper geschraubt wird, kann aus einer Reihe von Materialien, wie beispielsweise Kunststoffen und Metallen, bestehen. Bevorzugt sind Metalle, insbesondere Edelstahle wie 1.4435 und 1.4305 (alte Bezeichnungen: V2A und V4A), die resistent gegen Reinigungsflüssigkeiten sind.

Vorteilhaft für die Funktionsweise der für das erfindungsgemäße Verfahren einsetzbaren Vorrichtung ist es weiterhin, wenn im oberen Bereich des Bassingrundkörpers, unterhalb der Düsen, mindestens eine weitere Ausnehmung für einen weiteren Fluidkanal vorgesehen ist. Durch diesen Fluidkanal kann das Bassin mit frischer Waschflüssigkeit befüllt werden. Der genannte Fluidkanal kann jedoch auch als Überlauf oder Absaugkanal verwendet werden, um die Wassersäule in dem Bassin auf einem definierten Niveau zu halten. Dies ist insbesondere vorteilhaft, wenn die aus den Düsen austretenden Flüssigkeitsmengen nicht genau kontrolliert werden und der Flüssigkeitspegel daher nicht auf andere einfache Weise gesteuert werden kann. Ein vorbekannter Flüssigkeitsspiegel im Bassin ist von Vorteil, weil auf eine Detektion der Flüssigkeitsoberfläche verzichtet werden kann und trotzdem ein ungewollt tiefes Eintauchen der Pipette in die Flüssigkeiten vermieden werden kann. Die Waschabläufe sind auf diese Weise auch einfacher standardisierbar.

Sofern in dieser Anmeldung von Waschgut die Rede ist, sind damit Pipettiernadeln gemeint. An einem Antriebsarm befestigte Pipettiernadeln sind in Analyseautomaten des Standes der Technik weit verbreitet, so daß an dieser Stelle keine detaillierte Beschreibung von Antriebsarmen und deren Steuerung erfolgt. Es ist jedoch wichtig, daß eine zentrale Steuereinheit vorhanden ist, die die Bewegung der Antriebsarme und die Steuerung der Fluidströme bzw. der Pumpen koordiniert regelt. Der Antriebsarm muß die Pipettiernadel über die Öffnung des Bassins führen und das Waschgut in das Bassininnere absenken. Der Antriebsarm muß daher eine Rotations- und eine Translationsbewegung in der Vertikalen oder Translationsbewegungen in mindestens zwei Raumrichtungen durchführen können.

Zur Erfindung gehört weiterhin ein Verfahren zur Reinigung von Pipettiernadeln mit einer Vorrichtung, bei der die Pipettiernadel in das Innere des Bassins hineingeführt und durch mindestens eine Düse mit einer Waschflüssigkeit besprüht wird. Dabei ist es günstig, das Waschgut auf eine Höhe zu fahren, bei der sich der während des Pipettierens durch Flüssigkeit benetzte Bereich vollständig unterhalb des Niveaus der Düsen liegt. Andererseits ist es wenig günstig, wenn ein wesentlich größerer Bereich des Waschgutes als der vorangehend beschriebene abgeduscht wird, da in einem solchen Fall die Gefahr besteht, elektrische Kontakte oder dergleichen zu befeuchten oder aber die Wascheffizienz zu verringern. Besonders günstig ist es, wenn sich die Oberkante des oben genannten Bereiches des Waschgutes 5 bis 15 mm unterhalb des Niveaus des Düsen befindet. Vorteilhaft findet das Besprühen (Abduschen) statt, während das Waschgut aus dem Bassin herausgezogen wird. Zusätzlich kann das Waschgut auch in eine Waschflüssigkeit, die sich im Bassin befindet, eingetaucht werden. Es wird so erreicht, daß Anlagerungen oder Verkrustungen, die sich am Waschgut befinden, aufgeweicht und beim späteren Abduschvorgang durch die Düse endgültig gelöst werden. Durch den Abduschvorgang wird das Waschgut während des Vorganges mit frischer Waschflüssigkeit gereinigt, so daß ein Anhaften von kontaminierter Waschflüssigkeit nach Beendigung der Reinigung vermieden werden kann, wodurch auch die Waschstation mit dieser Waschflüssigkeit gefüllt wird. Bei einer Reinigung von Pipettiernadeln ist es weiterhin vorteilhaft, eine Innenspülung in der Weise vorzunehmen, daß die Nadel in die Waschflüssigkeit im Bassin eingetaucht und Waschflüssigkeit hindurchgeleitet wird. Durch das Eintauchen der Pipettiernadel wird eine Aerosolbildung vermieden und außerdem durch Ausbildung von Flüssigkeitswirbeln an der Nadelaußenseite eine zusätzliche Reinigung erzielt.

Vorteilhaft wird eine Pipettiernadel in die Waschflüssigkeit im Bassin eingetaucht und mit einer Geschwindigkeit von weniger als 14 cm/sec herausgezogen, um ein vollständiges Abgleiten der Flüssigkeit, die die Nadel benetzt, unter Vermeidung von Tropfenbildung zu erreichen. Nach dem Verlassen der Flüssigkeit kann die Pipettiernadel mit höherer Geschwindigkeit bewegt werden.

Die vorangehend beschriebenen Waschprozesse für eine Pipettiernadel betreffen sowohl eine Innen- als auch eine Außenspülung. Es ist natürlich auch möglich, nur eine Innen- oder Außenspülung vorzunehmen. Insbesondere ist es vorteilhaft, bei gemeinsamer Aufnahme von zwei oder mehr verschiedenen Fluiden in eine Pipettiernadel zwischen den einzelnen Aufnahmevorgängen eine Außenspülung der Pipette vorzunehmen, um eine Verschleppung zu vermeiden oder zumindest zu reduzieren. Dies ist vor allem dann vorteilhaft, wenn analytische Untersuchungen mit Reagenzien durchgeführt werden, die ihrerseits auch als Analyt nachgewiesen werden. In solch einem Fall könnte das Reagenz bei einem ersten Test in die Probe verschleppt werden und bei einem nachfolgenden Test mit dieser Probe zu einem falsch positiven Analysenergebnis führen. Bei der gemeinsamen Aufnahme verschiedener Flüssigkeiten in eine Pipettiernadel hat es sich als günstig erwiesen, nach Aufnahme einer Flüssigkeit (z.B. Reagenz) zunächst eine Trennflüssigkeit oder eine Trennluftblase in die Pipettiernadel und dann erst eine weitere Flüssigkeit (z.B. Reagenz oder Probe) aufzunehmen.

Waschflüssigkeiten (auch bezeichnet als Reinigungsflüssigkeiten) im Sinne der Erfindung umfassen die für Analyseautomaten gängigen Flüssigkeiten und Gemische, d. h. wässrige Lösungen, denen beispielsweise Detergentien, Salze, Konservierungsmittel und ggf. auch Lösungsvermittler zugesetzt sind.

Eine erfindungsgemäße Vorrichtung wird anhand der folgenden Figuren genauer beschrieben.
- Fig. 1:: Querschnitt einer Vorrichtung zur Reinigung von Pipettiernadeln/Rührern
- Fig. 2:: Außenansicht der Vorrichtung
- Fig. 3:: Reinigungsschritte einer Pipettiernadel
- Fig. 4:: Reinigungsschritte eines Rührers

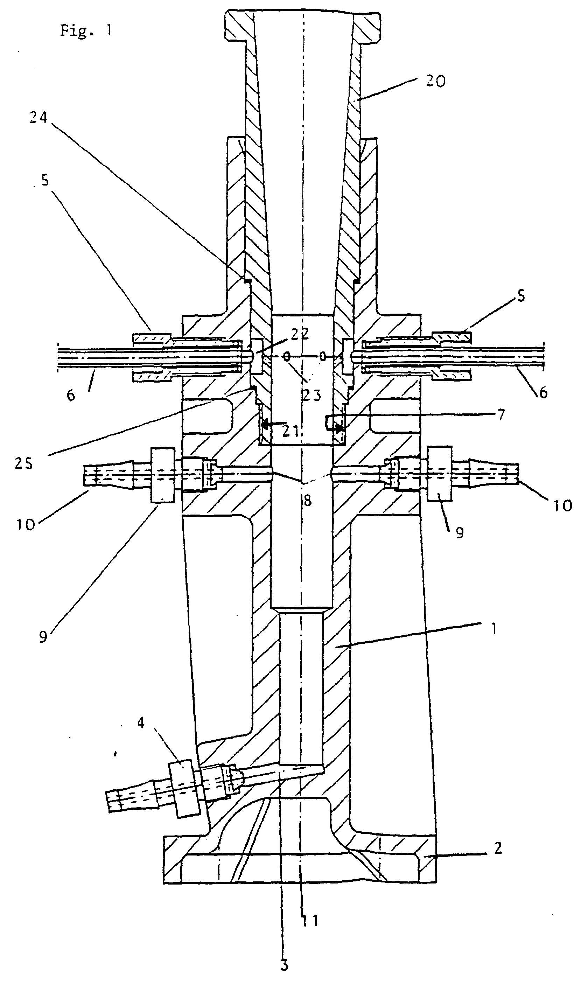

Fig. 1 zeigt einen Querschnitt parallel zur Längsachse der erfindungsgemäßen Reinigungsvorrichtung. Der Bassingrundkörper (1) besitzt an seiner Unterseite einen Standfuß (2), der eine Montage der Vorrichtung auf einer Grundplatte ermöglicht. Der Bassingrundkörper ist aus PPS (Polyphenylensulfid) gespritzt. Der Bassininnenraum besitzt eine zylindrische Gestalt, wobei ausgehend von der unteren Stirnfläche des Zylinders ein erster Fluidkanal eingelassen ist. An der Außenseite des Bassingrundkörpers befindet sich eine Verschraubung (4), die mit ihrer einen Seite in den Bassingrundkörper eingeschraubt ist und auf der anderen Seite einen Anschluß für einen Schlauch trägt.

Im oberen Bereich des Bassingrundkörpers befinden sich zwei gegenüberliegende Ausnehmungen, in die Flansche (5) eingeschraubt sind. In den Flanschen (5) befinden sich Schläuche (6), die mit Waschflüssigkeit gespeist werden. Der Bassingrundkörper besitzt in seinem oberen Bereich weiterhin ein Innengewinde (7), in das ein Einsatz (20) aus Stahl eingeschraubt ist. Zu diesem Zweck besitzt der Einsatz (20) in seinem unteren Bereich ein Außengewinde (21). Oberhalb dieses Gewindes befindet sich eine auf der Außenfläche des Einsatzes ringförmig umlaufende Nut (22). Zusammen mit dem Bassingrundkörper (1) bildet die Nut (22) einen Kanal für die Waschflüssigkeit, die aus den Schläuchen (6) austritt. In der Nut (22) befinden sich Bohrungen (23), die als Düsen dienen. Die in Fig. 1 dargestellte Apparatur besitzt sechs solcher Bohrungen (23), die so ausgerichtet sind, daß sich die aus ihnen austretende Flüssigkeit auf der durch den Bassingrundkörper gebildeten Zylinderachse (11) trifft. Die aus den Düsen austretende Flüssigkeit ist um ca. 45 ° gegen die Waagerechte nach unten geneigt. Zur Abdichtung des zwischen Bassingrundkörper und Einsatz (20) bestehenden Flüssigkeitskanales besitzt die Vorrichtung zwei Dichtringe (24, 25).

Die in Fig. 1 dargestellte Apparatur besitzt weiterhin zwei gegenüberliegende Ausnehmungen (8), die sich unterhalb der Düsen (23), jedoch oberhalb der Ausnehmung (3) befinden. In diesen Ausnehmungen sind wiederum Verschraubungen (9) eingeschraubt, die mit Schläuchen (10) verbunden sind. Die Schläuche (10) sind mit einer Absaugvorrichtung (nicht dargestellt) verbunden, so daß gewährleistet werden kann, daß der Flüssigkeitsspiegel im Bassin nicht über die Höhe, in der die Ausnehmungen (8) angebracht sind, ansteigt.

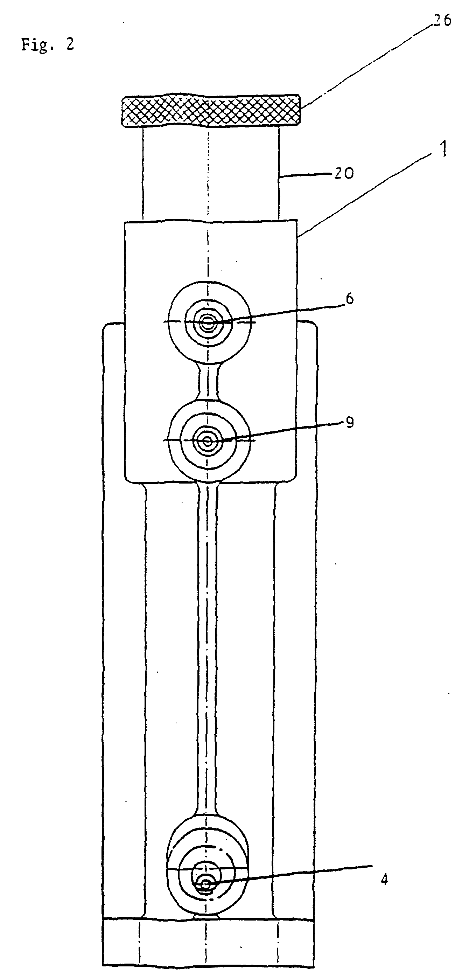

Fig. 2 zeigt die erfindungsgemäße Reinigungsvorrichtung in einer Seitenansicht. In dieser Darstellung sind insbesondere der Bassingrundkörper (1) sowie die Verschraubungen (4, 6 und 9) zu erkennen. Aus dem Bassingrundkörper ragt der eingeschraubte Einsatz (20) heraus. Der Einsatz trägt an seiner Oberkante einen an der Außenseite aufgerauhten Flansch (26), der das Handling beim Ein- und Ausschrauben des Einsatzes (20) erleichtert. Eine erfindungsgemäße Apparatur mit einschraubbarem Einsatz besitzt den Vorteil, daß sie bei herausgeschraubtem Einsatz leichter gereinigt werden kann.

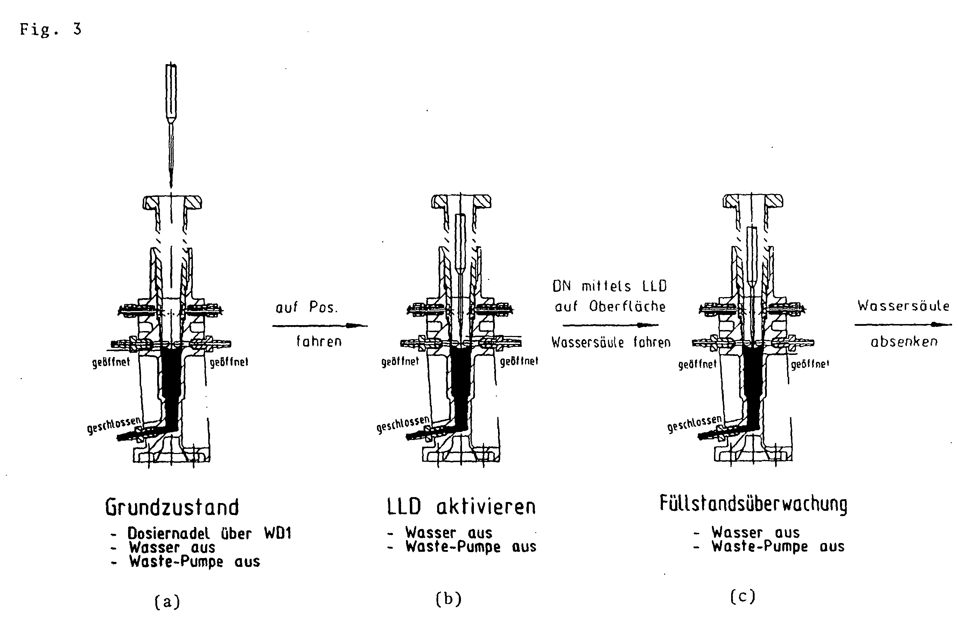

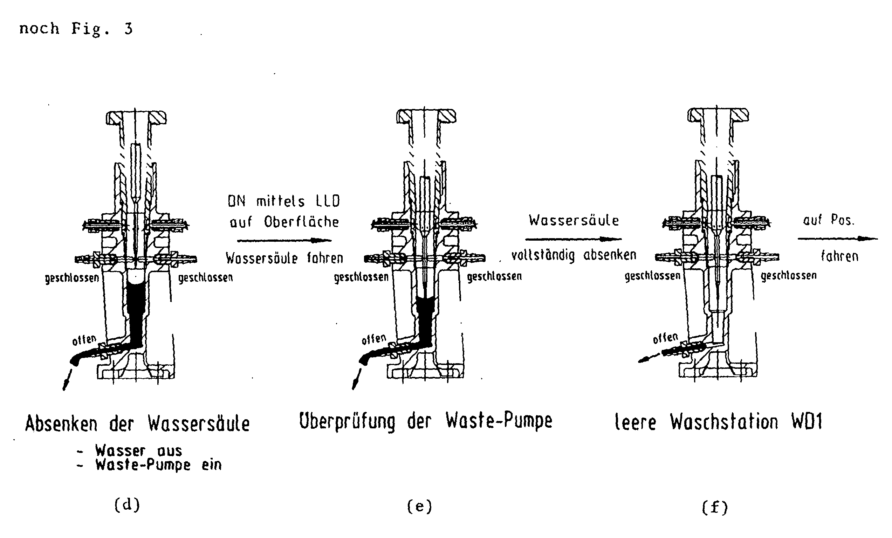

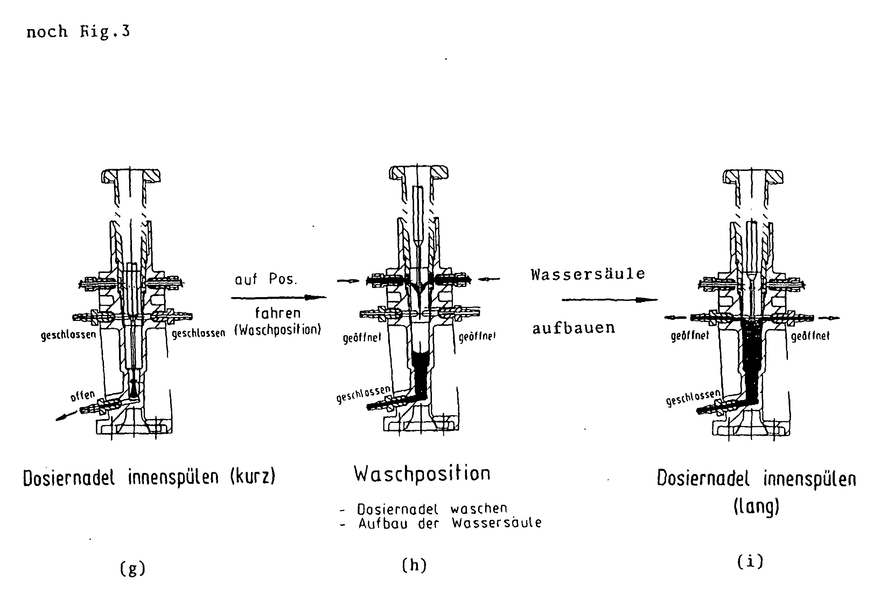

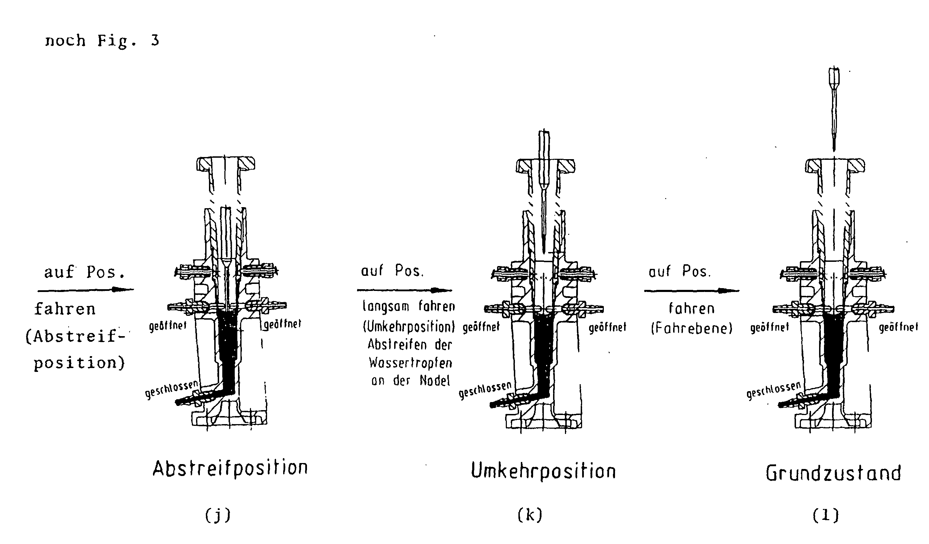

Fig. 3 zeigt die Reinigungsschritte einer Pipettiernadel, auch bezeichnet als Dosiernadel. In Schritt (a) wird die Dosiernadel über die erfindungsgemäße Reinigungsvorrichtung (in der Figur mit WD1 bezeichnet) gefahren. Zu diesem Zeitpunkt befindet sich im Bassin der Reinigungsvorrichtung bereits Flüssigkeit von einem vorangehenden Reinigungszyklus. In Schritt (b) wird die Pipettiernadel (bezeichnet mit DN) auf die Flüssigkeitsoberfläche abgesenkt, was mittels einer elektronischen Oberflächendetektion (LLD = Liquid level detection) erfolgt. In Schritt (c) erfolgt eine Kontrolle des aufgrund der Oberflächendetektion gefundenen Füllstandes. Darauf folgend wird die Flüssigkeitssäule im Bassin abgesenkt (Schritt (d)) und die Pipettiernadel auf die nunmehr niedrigere Flüssigkeitssäule abgesenkt (Schritt (e)). Mit dieser Vorgehensweise kann sowohl die Förder- als auch Absaugfunktion des Systems überprüft werden sowie das Vorhandensein von Flüssigkeit im Bassin überwacht werden. Die Flüssigkeitsäule wird in Schritt (f) vollständig abgesenkt und die Pipettiernadel soweit in die Reinigungsvorrichtung abgesenkt, daß die Nadelspitze in einen verjüngten Bereich der Reinigungsvorrichtung gelangt (siehe Schritt (g)). Es erfolgt nun ein Spülen der Pipettiernadel durch Hindurchleiten frischer Waschflüssigkeit. Aufgrund der Anordnung der Pipettenspitze in dem tiefliegenden verjüngten Bereich und einer zu diesem Zeitpunkt erfolgenden Absaugung von Flüssigkeit durch den Fluidkanal an der Unterseite kann verhindert werden, daß Aerosol der Waschflüssigkeit aus der Reinigungsvorrichtung austritt und daß der obere Bereich der Waschstation durch diese Reinigungsflüssigkeit kontaminiert wird.

Nach dieser Innenspülung wird die Pipette gemäß Schritt (h) so positioniert, daß die Pipettenspitze vom Strahlenkranz der Waschflüssigkeit getroffen wird. Dabei kann die Position der Pipette über oder unter der Oberfläche der Säule der Waschflüssigkeit liegen. Durch das Abduschen der Dosiernadel füllt sich das Bassin mit Waschflüssigkeit. Nach dem Waschen wird die Pipette ggf. geringfügig in die Waschflüssigkeit hineingefahren (siehe Schritt (i)), wobei diese Position mit der Abstreifposition (j) identisch sein kann. Es erfolgt nunmehr ein weiteres Innenspülen der Pipette durch Hindurchleiten von Flüssigkeit in das Bassin hinein (siehe Schritt (i)). Nach dieser Spülung wird die Pipette gegebenenfalls in eine definierte Abstreifposition (j) gebracht und langsam aus der Waschflüssigkeit herausgezogen (Schritt (k)). Ein Herausziehen der Pipette aus der Reinigungsvorrichtung führt zurück zum Grundzustand (siehe Schritt (l)).

Sofern sich bereits Dosiergut in der Dosiernadel befindet, findet nur eine Außenspülung statt. Hierzu beginnt der Zyklus mit dem Grundzustand (a), überspringt die Schritte (b) bis (g) und fährt mit (h) fort. Das Abduschen erfolgt wie unter (h) beschrieben (Bassin ist noch wie in (a) gefüllt). Der Schritt (i) entfällt und der Zyklus endet mit den Schritten (j),(k) und (l). Vorteilhaft kann in diesem Ablauf am Ende von oder nach Schritt (h) die Aufnahme einer geringen Menge Flüssigkeit und/oder einer Luftblase erfolgen. Besonders günstig ist es, wenn in die Dosiernadel Flüssigkeit aus einem Tropfen aufgenommen wird, der nach dem Abduschen an der Dosiernadelspitze zurückbleibt. Auch eine Aufnahme unmittelbar an der sauberen Oberfläche der Flüssigkeit in der Waschstation ist möglich.

Die Aufnahme einer Luftblase erfolgt zweckmäßigerweise am Ende von Schritt (k) oder (l). Die als Trennflüssigkeit aufgenommene Flüssigkeitsmenge liegt normalerweise unterhalb 5µl, vorzugsweise zwischen 1 und 3µl. Die Aufnahme von Flüssigkeit geschieht vorzugsweise nur nach einer Reagenzaufnahme, die einer Probenaufnahme vorangeht. Gleiches gilt für die Aufnahme einer Luftblase.

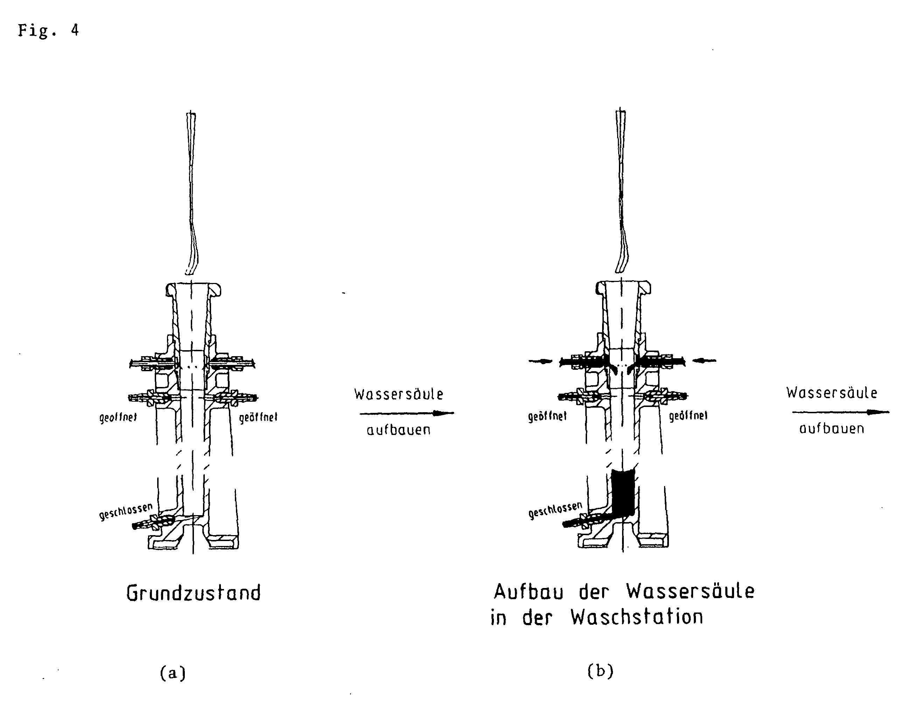

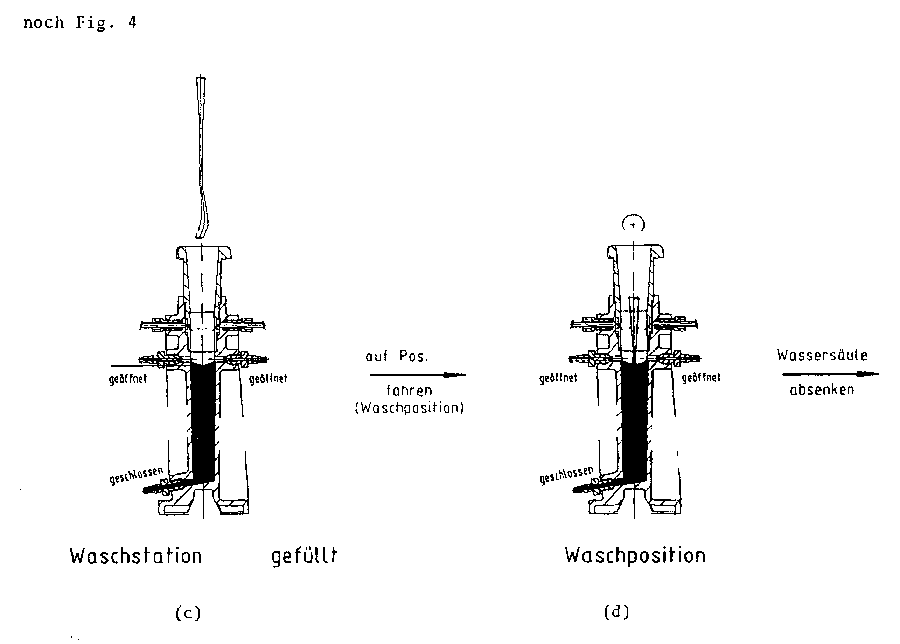

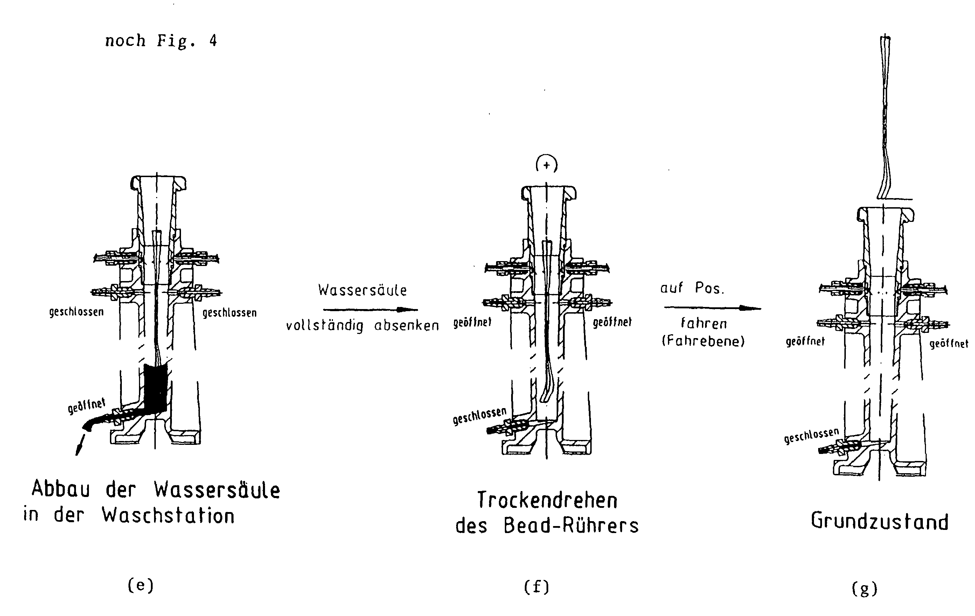

Fig. 4 zeigt die Reinigungsschritte für einen Rührer. In der Fig. 4a ist der Grundzustand der Reinigungsvorrichtung mit dem Rührer dargestellt. Es wird nunmehr eine Wassersäule aufgebaut und der Rührer in die Waschflüssigkeit eingetaucht (Fig. 4b, c und d). Durch Drehen des Rührers wird dieser gereinigt und darauf die Wassersäule abgebaut (Fig. 4e). An dem Rührer haftende Flüssigkeit wird durch ein schnelles Drehen abgeschleudert (Fig. 4f) und der Rührer darauffolgend wieder aus der Reinigungsvorrichtung herausgezogen.

### Bezugszeichenliste

- 1: Bassingrundkörper
- 2: Vorsprung
- 3: Fluidkanal
- 4: Verschraubung
- 5: Verschraubung
- 6: Schlauch
- 7: Innengewinde
- 8: Ausnehmung
- 9: Verschraubung
- 10: Schlauch
- 20: Einsatz
- 21: Außengewinde
- 22: Ringförmige Nut
- 23: Bohrungen
- 24, 25: Dichtungsringe
- 26: Aufgerauhter Flansch

## Patentansprüche

1. Verfahren zur Reinigung von Pipettiernadeln mit einer Reinigungsvorrichtung, enthaltend ein Bassin zur Aufnahme von Waschflüssigkeit, das in seinem unteren Bereich einen ersten Fluidkanal zur Befüllung und/oder Entleerung, sowie in seinem oberen Bereich mindestens einen zweiten als Überlauf einsetzbaren Fluidkanal und mindestens einen Zulauf aufweist, der in mindestens eine Düse mündet, die in das Bassininnere gerichtet ist, wobei das Verfahren folgende Schritte umfasst:
i) Fahren der Pipettiernadel über eine in dem Bassin enthaltene Waschflüssigkeitssäule,
ii) Besprühen der Pipettiernadel mit Waschflüssigkeit durch die mindestens eine Düse, wobei der erste Fluidkanal geschlossen und der zweite Fluidkanal geöffnet ist,
iii) Eintauchen der Pipettiernadel in die Waschflüssigkeitssäule und
iv) langsames Herausziehen der Pipettiernadel aus der Waschflüssigkeitssäule zum Erreichen eines Abgleitens von die Pipettiernadel benetzender Flüssigkeit.

2. Verfahren gemäß Anspruch 1, **dadurch gekennzeichnet, dass** das langsame Herausziehen der Pipettiernadel aus der Waschflüssigkeitssäule mit einer Geschwindigkeit von weniger als 14 cm/s erfolgt.

3. Verfahren gemäß einem der Ansprüche 1 oder 2, **dadurch gekennzeichnet, dass** die Pipettiernadel zur Reinigung zusätzlich in die Waschflüssigkeitssäule eingetaucht wird.

4. Verfahren gemäß einem der Ansprüche 1 bis 3, **dadurch gekennzeichnet, dass** sich eine erste Flüssigkeit in der Pipettiernadel befindet und nach dem Besprühen der Pipettiernadel Waschflüssigkeit aus einem Tropfen, der an der Spitze der Pipettiernadel zurückbleibt, oder vor oder nach dem Besprühen Waschflüssigkeit aus der Waschflüssigkeitssäule als Trennflüssigkeit in die Pipettiernadel aufgenommen wird.

5. Verfahren gemäß Anspruch 4, bei dem weniger als 5 µL Trennflüssigkeit aufgenommen wird.

6. Verfahren gemäß einem der Ansprüche 1 bis 3, **dadurch gekennzeichnet, dass** Waschflüssigkeit durch die Pipettiernadel hindurchgeleitet wird, um eine Innenspülung vorzunehmen.

7. Verfahren gemäß Anspruch 6, **dadurch gekennzeichnet, dass** die Pipettiernadel während der Innenspülung in die Waschflüssigkeitssäule eintaucht.

8. Verfahren gemäß Anspruch 6, **dadurch gekennzeichnet, dass** vor der Durchführung der Innenspülung die Waschflüssigkeitssäule vollständig abgesenkt und die Pipettiernadel so weit in die Reinigungsvorrichtung abgesenkt wird, dass die Spitze der Pipettiernadel in einen verjüngten Bereich abgesenkt wird, in dem die Innenspülung durchgeführt wird.

9. Verfahren gemäß Anspruch 8, **dadurch gekennzeichnet, dass** während der Innenspülung der Pipettiernadel durch den ersten Fluidkanal Flüssigkeit abgesaugt wird.

10. Verfahren gemäß einem der Ansprüche 1 bis 7, **dadurch gekennzeichnet, dass** es zwischen den Schritten i) und ii) folgende Schritte enthält:
A) Absenken der Pipettiernadel auf die Oberfläche der Waschflüssigkeitssäule mittels einer elektronischen Oberflächendetektion,
B) Kontrolle eines aufgrund der elektrischen Oberflächendetektion gefundenen Füllstandes,
C) Absenken der Waschflüssigkeitssäule im Bassin,
D) Absenken der Pipettiernadel auf die Oberfläche der Waschflüssigkeitssäule,
E) vollständiges Absenken der Waschflüssigkeitssäule und Absenken der Pipettiernadel in einen verjüngten Bereich der Reinigungsvorrichtung,
F) Innenspülen der Pipettiernadel durch Hindurchleiten frischer Waschflüssigkeit während der Absaugung von Flüssigkeit durch den ersten Fluidkanal und
zwischen den Schritten iii) und iv) eine weiteres Innenspülen der Pipettiernadel erfolgt.

## Claims

1. Method of cleaning pipetting needles with a cleaning device containing a basin for accommodating washing fluid, which has a first fluid passage in its bottom region for filling and/or emptying and, in its top region, at least a second fluid passage which can be used as an overflow and at least one inlet opening into at least one nozzle directed towards the basin interior, which method comprises the following steps:
i) moving the pipetting needle through a column of washing fluid contained in the basin,
ii) spraying the pipetting needle with washing fluid by means of the at least one nozzle, during which the first fluid passage is closed and the second fluid passage is open,
iii) immersing the pipetting needle in the column of washing fluid and
iv) slowly withdrawing the pipetting needle from the column of washing fluid, causing wetting fluid to slide off the pipetting needle.

2. Method as claimed in claim 1, **characterised in that** the slow withdrawal of the pipetting needle from the column of washing fluid takes place at a rate of less than 14 cm/s.

3. Method as claimed in one of claims 1 or 2, **characterised in that** the pipetting needle is additionally immersed in the column of washing fluid for cleaning purposes.

4. Method as claimed in one of claims 1 to 3, **characterised in that** a first fluid is disposed in the pipetting needle and, after spraying the pipetting needle, washing fluid is drawn into the pipetting needle from a drop left behind on the tip of the pipetting needle or is drawn into the pipetting needle from the column of washing fluid before or after spraying and serves as a separating fluid.

5. Method as claimed in claim 4, whereby less than 5 µL of separating fluid is drawn in.

6. Method as claimed in one of claims 1 to 3, **characterised in that** washing fluid is fed through the pipetting needle in order to effect internal rinsing.

7. Method as claimed in claim 6, **characterised in that** the pipetting needle is immersed in the column of washing fluid during the internal rinsing process.

8. Method as claimed in claim 6, **characterised in that**, prior to performing the internal rinsing process, the column of washing fluid is completely lowered and the pipetting needle is lowered so far into the cleaning device that the tip of the pipetting needle is lowered into a tapered region in which the internal rinsing process is performed.

9. Method as claimed in claim 8, **characterised in that**, during the process of internally rinsing the pipetting needle, fluid is sucked through the first fluid passage.

10. Method as claimed in one of claims 1 to 7, **characterised in that** the following steps are incorporated between steps i) and ii):
A) the pipetting needle is lowered onto the surface of the column of washing fluid by means of an electronic surface detection system,
B) a level assumed as a result of the electric surface detection system is checked,
c) the column of washing fluid in the basin is lowered,
D) the pipetting needle is lowered onto the surface of the column of washing fluid,
E) the column of washing fluid is completely lowered and the pipetting needle is lowered into a tapered region of the cleaning device,
F) the pipetting needle is internally rinsed by feeding fresh washing fluid through whilst fluid is being sucked through the first fluid passage and
the pipetting needle is internally rinsed again between steps iii) and iv).

## Revendications

1. Procédé pour nettoyer des aiguilles de pipetage avec un dispositif de nettoyage contenant une bassine pour recevoir un liquide de lavage, qui présente dans sa zone inférieure, un premier canal pour fluide destiné au remplissage et/ou vidage, ainsi que dans sa zone supérieure, au moins un deuxième canal pour fluide pouvant être employé comme trop-plein, et au moins une amenée qui débouche dans au moins une buse, qui est dirigée dans l'intérieur du bassin, le procédé comprenant les étapes suivantes :
i) déplacement de l'aiguille de pipetage au-dessus d'une colonne de liquide de lavage contenue dans la bassine,
ii) aspersion de l'aiguille de pipetage avec le liquide de lavage à travers ladite au moins une buse, le premier canal pour fluide étant fermé et le deuxième canal ouvert,
iii) immersion de l'aiguille de pipetage dans la colonne de liquide de lavage et
iv) extraction lente de l'aiguille de pipetage, de la colonne de liquide de lavage pour parvenir à faire tomber par glissement le liquide mouillant l'aiguille de pipetage.

2. Procédé selon la revendication 1, **caractérisé en ce que** l'extraction lente de l'aiguille de pipetage de la colonne de liquide de lavage se réalise à une vitesse inférieure à 14 cm/s.

3. Procédé selon l'une quelconque des revendications 1 ou 2, **caractérisé en ce que** pour le nettoyage, l'aiguille de pipetage est en outre immergée dans la colonne de liquide de lavage.

4. Procédé selon l'une quelconque des revendications 1 à 3, **caractérisé en ce qu'**un premier liquide se trouve dans l'aiguille de pipetage et après aspersion de l'aiguille de pipetage, du liquide de lavage provenant d'une goutte, qui subsiste sur la pointe de l'aiguille de pipetage, ou du liquide provenant de la colonne de liquide de lavage, avant ou après l'aspersion, est recueilli en tant que liquide de séparation dans l'aiguille de pipetage.

5. Procédé selon la revendication 4, dans lequel moins de 5 µl de liquide de séparation est recueilli.

6. Procédé selon l'une quelconque des revendications 1 à 3, **caractérisé en ce que** le liquide de lavage est conduit à travers l'aiguille de pipetage afin de procéder à un rinçage intérieur.

7. Procédé selon la revendication 6, **caractérisé en ce que** l'aiguille de pipetage pendant le rinçage intérieur plonge dans la colonne de liquide de lavage.

8. Procédé selon la revendication 6, **caractérisé en ce que**, avant la réalisation du rinçage intérieur, la colonne de liquide de lavage est abaissée complètement et l'aiguille de pipetage est abaissée dans le dispositif de nettoyage jusqu'au point où la pointe de l'aiguille de pipetage est abaissée dans une zone rétrécie, dans laquelle se réalise le rinçage intérieur.

9. Procédé selon la revendication 8, **caractérisé en ce que**, pendant le rinçage intérieur de l'aiguille de pipetage, du liquide est aspiré par le premier canal pour fluide.

10. Procédé selon l'une quelconque des revendications 1 à 7, **caractérisé en ce qu'**il renferme les étapes suivantes entre les étapes i) et ii) :
A) abaissement de l'aiguille de pipetage sur la surface de la colonne de liquide de lavage au moyen d'une détection électronique de surface,
B) contrôle d'un état de remplissage déterminé par la détection électrique de surface,
C) abaissement de la colonne de liquide de lavage dans la bassine,
D) abaissement de l'aiguille de pipetage sur la surface de la colonne de liquide de lavage,
E) abaissement complet de la colonne de liquide de lavage et abaissement de l'aiguille de pipetage dans une zone rétrécie du dispositif de nettoyage,
F) rinçage intérieur de l'aiguille de pipetage en conduisant du liquide de lavage frais à travers le premier canal pour fluide pendant l'aspiration du liquide, et
un rinçage supplémentaire de l'intérieur de l'aiguille de pipetage se réalise entre les étapes iii) et iv).
